# EUROPÄISCHE PATENTSCHRIFT

(11) **EP 1 976 898 B1**
(45) Veröffentlichungstag und Bekanntmachung des Hinweises auf die Patenterteilung: **13.03.2019**
(21) Anmeldenummer: 07700248.3
(22) Anmeldetag: 04.01.2007
(51) Int. Cl.: C08G 18/79, C09D 175/04, C08K 5/01, C08G 18/02

(54) **ISOCYANATHALTIGE ZUBEREITUNGEN**
ISOCYANATE-CONTAINING FORMULATIONS
PREPARATIONS CONTENANT DES ISOCYANATES

(30) Priorität: 13.01.2006 EP 06100316
(43) Veröffentlichungstag der Anmeldung: 08.10.2008
(73) Patentinhaber: BASF SE, 67056 Ludwigshafen am Rhein (DE)
(72) Erfinder: JOKISCH, Carl, 68259 Mannheim (DE); BINDER, Horst, 68623 Lampertheim (DE); SCHÄFER, Harald, 68219 Mannheim (DE)
(74) Vertreter: BASF IP Association
(86) Internationale Anmeldenummer: PCT/EP2007/050060
(87) Internationale Veröffentlichungsnummer: WO 2007/082789

(56) Entgegenhaltungen:
- EP-A- 1 371 636
- WO-A-01/60886
- DE-A1- 10 022 036
- US-A- 3 816 496

## Beschreibung

Die vorliegende Erfindung betrifft niedrigviskose Zubereitungen von isocyanathaltigen Verbindungen in Lösungsmitteln und deren Verwendung.

Zubereitungen von Polyisocyanaten, beispielsweise Isocyanuraten, sind bereits lange bekannt und in Form zahlreicher Handelsprodukte verschiedener Hersteller erhältlich.

DE 10022036 A1 offenbart Beispiele, in denen Solventnaphtha gegebenenfalls neben 1-Methoxypropylacetat oder Butylacetat als Lösungsmittel für blockierte Polyisocyanate eingesetzt wird.

WO 01/60886 offenbart in Beispiel 1 mit Ethanol blockierte Isocyanurate von Hexamethylendiisocyanat in Solventnaphtha 100 mit einer angegebenen Viskosität.

Da Polyisocyanate häufig eine hohe Viskosität aufweisen oder sogar bei Raumtemperatur fest sind, werden solchen Polyisocyanatzubereitungen oftmals Lösungsmittel zugegeben. Weit verbreitet als Lösungsmittel sind Butylacetat, Essigester, Methoxypropylacetat, Toluol, Xylol, fluorierte Aromaten, aliphatische und aromatische Kohlenwasserstoffgemische, sowie deren Gemische. Letztere werden beispielsweise unter den Handelsnamen Solvesso® der Firma ExxonMobil, Hydrosol® der Firma Kemetyl oder Shellsol® der Firma Shell oder unter den Bezeichnungen Solventnaphtha, Kristallöl, Testbenzin, Schwerbenzin etc. in verschiedenen und wechselnden Zusammensetzungen vertrieben.

Zweck der Abmischung von Polyisocyanaten mit Lösungsmitteln ist der, hochviskose oder feste Polyisocyanate zu lösen und Polyisocyanatzubereitungen in möglichst niedrigviskoser Form zur Verfügung zu stellen. Dies dient zum Beispiel dazu, die Mischbarkeit und Verarbeitbarkeit, insbesondere höherviskoser oder fester Polyisocyanate zu verbessern, aber auch, die Oberflächengüte von Lacken zu verbessern.

Aufgabe der vorliegenden Erfindung war es, Polyisocyanatzubereitungen zur Verfügung zu stellen, die eine besonders niedrige Viskosität aufweisen.

Die Aufgabe wurde gelöst durch Gemische, enthaltend
- (A) mindestens ein gegebenenfalls blockiertes Diisocyanat und/oder Polyisocyanat,
- (B) mindestens ein aromatisches Kohlenwasserstoffgemisch, überwiegend bestehend aus 9 und 10 Kohlenstoffatome aufweisenden alkylsubstituierten aromatischen Verbindungen, wobei überwiegend einen Gehalt von mehr als 50 Gew% bedeutet, sowie
- (C) gegebenenfalls mindestens ein weiteres Lösungsmittel, das ein anderes als (B) ist,
in denen in dem aromatischen Kohlenwasserstoffgemisch (B) der Anteil an 10 Kohlenstoffatome aufweisenden alkylsubstituierten aromatischen Verbindungen nicht mehr als 25 Gew% beträgt und die Diisocyanate oder Polyisocyanate in Komponente (A) hergestellt sind aus Isophorondiisocyanat.

Es wurde gefunden, daß derartige Gemische eine signifikant niedrigere Viskosität zeigen, als Gemische mit gleichem Gehalt an (A) und einem höheren Anteil an 10 Kohlenstoffatome aufweisenden alkylsubstituierten aromatischen Verbindungen.

Die unterschiedlichen handelsüblichen aromatischen Kohlenwasserstoffgemische weisen jeweils lediglich eine geringe Viskosität von weniger als 1 mPas auf. Ein unterschiedlicher Anteil an 9 und 10 Kohlenstoffatome aufweisenden alkylsubstituierten aromatischen Verbindungen wirkt sich kaum merklich auf die Viskosität der reinen Kohlenwasserstoffgemische aus. Umso überraschender ist die Beobachtung, daß sich der Anteil an 9 und 10 Kohlenstoffatome aufweisenden alkylsubstituierten aromatischen Verbindungen ausgeprägt auf die Viskosität von Polyisocyanatzubereitungen auswirkt.

Die erfindungsgemäßen Gemische enthalten mindestens ein gegebenenfalls blockiertes Diisocyanat und/oder Polyisocyanat (A).

Dabei kann es sich um Monomere oder Oligomere von cycloaliphatischen Diisocyanaten handeln.

Die NCO Funktionalität solcher Verbindung beträgt in der Regel mindestens 1,8 und kann bis zu 8 betragen, bevorzugt 1,8 bis 5 und besonders bevorzugt 2 bis 4.

Als Polyisocyanate kommen insbesondere Isocyanuratgruppen aufweisende Polyisocyanate, Uretdiongruppen aufweisende Polyisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Uretonimin-modifizierte Polyisocyanate in Betracht, die jeweils aus Isophorondiisocyanat (IPDI) aufgebaut sind.

Bei den Diisocyanaten handelt es sich um 1-Isocyanato-3,3,5- trimethyl-5-(isocyanatomethyl)cyclohexan (Isophorondiisocyanat).

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

IPDI liegt zumeist als ein Gemisch, und zwar der cis- und trans-Isomere vor, in der Regel im Verhältnis zwischen 60:40 und 80:20 (w/w), bevorzugt im Verhältnis zwischen 70:30 und 75:25 und besonders bevorzugt im Verhältnis von ca. 75:25.

Aromatische Isocyanate sind solche, die mindestens ein aromatisches Ringsystem enthalten.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Für die vorliegende Erfindung können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Di- und Polyisocyanate (A) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber alternativ auch Di- und Polyisocyanate (A) mit einem höheren Chlorgehalt eingesetzt werden.

Weiterhin zu erwähnen sind
1) Isocyanuratgruppen aufweisende Polyisocyanate auf Basis von Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8. Als Isocyanurate kommen auch solche in Betracht, die hergestellt sind aus einer Mischung verschiedener Diisocyanate, z.B. aus HDI und IPDI oder einer Mischung (cyclo)aliphatischer und aromatischer Diisocyanate.
2) Uretdiondiisocyanate die von Isophorondiisocyanat abgeleitet sind. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch gebundenen Isocyanatgruppen. Diese Biuretgruppen aufweisenden Polyisocyanate weisen im allgemeinen einen NCO-Gehalt von 18 bis 22 Gew.-% und eine mittlere NCO-Funktionalität von 2,8 bis 8, insbesondere von 2,8 bis 4,5 auf.
4) Urethan- und/oder Allophanatgruppen aufweisende Polyisocyanate mit cycloaliphatisch gebundenen Isocyanatgruppen, wie sie beispielsweise durch Umsetzung von überschüssigen Mengen an Isophorondiisocyanat mit ein- oder mehrwertigen Alkoholen wie z.B. Methanol, Ethanol, *iso*-Propanol, n-Propanol, n-Butanol, *iso*-Butanol, sek-Butanol, tert-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butan-diol, 3-Methylpentan-1,5-diol, 2-Ethylhexan-1,3-diol, 2,4-Diethyloctan-1,3-diol, Hydroxypivalinsäureneopentylglykolester, Ditrimethylolpropan, Dipentaerythrit, 2,2-Bis(4-hydro-xycyclohexyl)propan, 1,1-, 1,2-, 1,3-und 1,4-Cyclohexandi-methanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate abgeleitet von Isophorondiisocyanat. Solche Oxadiazintriongruppen enthaltenden Polyisocyanate sind aus Diisocyanat und Kohlendioxid zugänglich.
6) Iminooxadiazindiongruppen enthaltende Polyisocyanate abgeleitet von Isophorondiisocyanat. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.
12) Polyisocyanate, die mehr als eine der unter 1-11 genannten Funktionalitäten enthalten, wie sie zum Beispiel in EP 1446435 beschrieben sind.

Die Polyisocyanate 1) bis 12) können im Gemisch, gegebenenfalls auch im Gemisch mit Diisocyanaten, eingesetzt werden.

Bevorzugte Verbindungen (A) sind die Urethane, Biurete und Isocyanurate von 1-Isocyanato-3-isocyanato-methyl-3,5,5-trimethyl-cyclohexan. Bevorzugt sind auch andere höherviskose oder feste Polyisocyanate, wie sie z.B. bei der Umsetzung von Di-/Polyisocyanaten zu höherfunktionellen Produkten oder bei der Verwendung anderer höherviskoser Monomere entstehen.

Erfindungsgemäß sind solche Di- und Polyisocyanate für den Einsatz in den erfindungsgemäßen Gemischen bevorzugt, die lösungsmittelfrei eine Viskosität bei 23 °C von mindestens 8.000 mPas, besonders bevorzugt mindestens 12.000 mPas, ganz besonders bevorzugt mindestens 20.000 mPas, insbesondere mindestens 50.000 mPas und speziell mindestens 100.000 mPas aufweisen. Besonders voteilhaft ist der Einsatz von bei 23 °C festen DI-und Polyisocyanaten.

Alternativ sind solche Polyisocyanate für den Einsatz in den erfindungsgemäßen Gemischen bevorzugt, die eine Funktionalität von mindestens 4 aufweisen.

Herstellbedingt können Polyisocyanate (A) noch einen geringen Anteil von dem ihnen zugrundeliegenden monomerem Diisocyanat aufweisen, beispielsweise bis zu 5 Gew%, besonders bevorzugt bis zu 3 Gew%, ganz besonders bevorzugt bis zu 2, insbesondere bis zu 1, speziell bis zu 0,5 und sogar bis zu 0,25 Gew%.

Die Art der Oligomerisierung sei hier am Beispiel der Isocyanuratbildung exemplarisch dargestellt. Die Durchführung der Oligomerisierung spielt für die Isocyanatkomponente (A) in der Regel keine wesentliche Rolle. Jedoch kann das Ausmaß der Oligomerisierung für das als Isocyanatkomponente (A) erhaltene Produkt einen wichtigen Parameter darstellen, da Produkte mit höherem Oligomerisierungsgrad zumeist auch eine höhere Viskosität aufweisen (siehe unten).

Bevorzugt können für eine Isocyanuratbildung folgende Katalysatoren eingesetzt werden:
Tetraalkylammoniumcarboxylate und Trialkylbenzylammoniumcarboxylate.

Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-0 010 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen oder aromatischen Kohlenwasserstoffrest und M ein Kation einer starken Base, z.B. ein Alkalimetallkation oder ein quarternäres Ammoniumkation, wie Tetraalkylammonium.

Quartäre Hydroxyalkylammoniumverbindungen der Formel
⊕

R,R',R"CH₂-CH(OH)-R^{⊖}O-CO-R

als Katalysator gemäß DE-A-26 31 733 (US-A-4 040 992).

Weiter bevorzugt sind quarternäre Ammoniumcarboxylate und/oder -hydroxylate der allgemeinen Formel 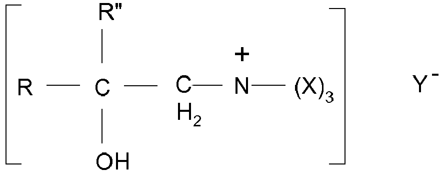 mit Y⁻= R'COO⁻ oder OH⁻
als Katalysator, in der X unabhängig voneinander gleiche oder verschiedene (cyclo)aliphatische, araliphatische oder heterocyclische Kohlenwasserstoffreste darstellen, wobei zwei Reste X mit dem quarternären Stickstoff einen gegebenenfalls ein oder mehrere Heteroatome enthaltenden Ring oder drei Reste X über ein gemeinsames Heteroatom mit dem quarternären Stickstoff einen bicyclischen Ring bilden können, R, R' und R" unabhängig voneinander Wasserstoff oder ein Rest aus der Gruppe Alkyl, Cycloalkyl oder Aralkyl mit 1-12 Kohlenstoffatomen bedeuten.

Dabei können die Ammoniumionen auch Teil eines ein- oder mehrgliedrigen Ringsystems sein, beispielsweise abgeleitet von Piperazin, Morpholin, Piperidin, Pyrrolidin oder Di-aza-bicyclo-[2.2.2]-octan.

Besonders bevorzugt sind solche Trimerisierungskatalysatoren wie sie bekannt sind aus der DE 10 2004 012571 A1, sowie aus der EP-A1 668 271, dort besonders von S. 4, Z. 16 bis S. 6, Z. 47.

Ganz besonders bevorzugt sind N-(2-Hydroxypropyl)-N,N,N-trimethylammonium-2-ethylhexanoat (DABCO TMR®) und N-(2-Hydroxypropyl)-N,N,N-trimethylammonium-2-formiat (DABCO TMR®-2) der Firma Air Products.

Zur besseren Handhabung kann der Katalysator in einem Lösungsmittel gelöst oder dispergiert werden. Es eignen sich hierzu beispielsweise 1 bis 8 Kohlenstoff aufweisende Alkohole, Diole, Ketone, Ether und Ester sowie deren Mischungen.

Beispielsweise werden die oben erwähnten Katalysatoren DABCO TMR® und DABCO TMR®-2 bevorzugt als ca. 75 Gew%ige Lösung in Ethylenglykol oder Propylenglykol eingesetzt.

Die oben aufgeführten Katalysatoren werden üblicherweise in einer Menge unter 0,1 Gew.-% bezogen auf des Gewicht des Isocyanats eingesetzt, bevorzugt unter 0,05, besonders bevorzugt unter 0,02, ganz besonders bevorzugt unter 0,015 Gew% und speziell unter 0,01 Gew%, gegebenenfalls gelöst oder dispergiert in einem Lösungsmittel (-gemisch), wie oben angegeben.

Üblicherweise wird der Katalysator, in Abhängigkeit vom verwendeten Katalysatortyp, in Mengen von mindestens 10 Gew.ppm, bevorzugt mindestens 20, besonders bevorzugt mindestens 30, ganz besonders bevorzugt mindestens 50 und insbesondere mindestens 70 Gew.ppm eingesetzt.

Bei der Oligomerisierung kann es sich beispielsweise um eine Umsetzung zu isocyanurat-, allophanat-, biuret-, uretdion-, oxadiazintrion-, iminooxadiazintrion- und/oder urethangruppenhaltigen Polyisocyanaten handeln, bevorzugt zu isocyanurat-, allophanat-, uretdion-, und/oder urethangruppenhaltigen und besonders bevorzugt isocyanurat-gruppenhaltigen Polyisocyanaten handeln. Dabei können andere Katalysatoren als die oben genannten geeigneter sein; diese sind dem Fachmann an sich bekannt.

Die Trimerisierung zu isocyanuratgruppenhaltigen Polyisocyanaten läßt sich in der Regel innerhalb von 1-120 Minuten Gesamtverweilzeit bei üblichen Reaktionsbedingungen bevorzugt kontinuierlich durchführen. Es werden Verbindungen erhalten, die einen oder auch mehrere Isocyanuratringe aufweisen. Verbindungen dieser Art sind in der Literatur beschrieben.

In einer bevorzugten Ausführungsform der vorliegenden Erfindung wird die Trimerisierung des Isocyanats partiell durchgeführt, so daß lediglich ein geringer Anteil an höheren Isocyanuraten, also solchen mit mehreren Isocyanuratringen entsteht. Höhere Isocyanurate führen zu einem Anstieg der Viskosität des Produktes und einem Verlust an Isocyanatgruppen.

So wird beispielsweise bei HDI die Umsetzung bis zu einem Umsatz von nicht mehr als 45%, bevorzugt bis zu 40, besonders bevorzugt bis zu 35% und ganz besonders bevorzugt bis zu 30% betrieben. Um nicht zu hohe Rückführströme zu haben, sollte der Umsatz mindestens 10%, bevorzugt mindestens 15% besonders bevorzugt mindestens 20 und ganz besonders bevorzugt mindestens 25% betragen.

Der Umsatz wird in der Regel so gesteuert, daß das Produkt, jeweils nach Abtrennung von unumgesetzten Diisocyanat, eine mittlere NCO-Funktionalität unter 8 aufweist, bevorzugt unter 3,8 und besonders bevorzugt unter 3,7. Es kann aber auch sinnvoll sein, Produkte mit einer höheren Funktionalität zu erhalten.

In Abhängigkeit vom verwendeten Katalysator und vom Verfahren kann teilweise ein gewisser Anteil an Uretdion gebildet werden. Dieser liegt in der Regel unter 5 Gew%, bevorzugt unter 3, besonders bevorzugt unter 2 und ganz besonders bevorzugt unter 1 Gew%.

Die Reaktion kann thermisch oder durch Zugabe eines Desaktivierungsmittels gestoppt werden.

Als Desaktivierungsmittel eignen sich beispielsweise anorganische Säuren, wie z.B. Chlorwasserstoff, phosphorige Säure oder Phosphorsäure, Carbonsäurehalogenide, wie z.B. Acetylchlorid oder Benzoylchlorid, Sulfonsäuren oder-ester, wie z.B. Methansulfonsäure, p-Toluolsulfonsäure, p-Toluolsulfonsäuremethyl- oder -ethylester, m-Chlorperbenzoesäure und vorzugsweise Dialkylphosphate wie z.B. Dibutylphosphat und Di-2-ethylhexylphosphat.

Die Desaktivierungsmittel können, bezogen auf die Menge an aktivem Trimerisierungskatalysator im Reaktionsgemisch, in äquivalenten oder überschüssigen Mengen verwendet werden, wobei die kleinste wirksame Menge, die experimentell einfach ermittelt werden kann, schon aus wirtschaftlichen Gründen bevorzugt wird. Beispielsweise wird das Desaktivierungsmittel im Verhältnis zum aktiven Trimerisierungskatalysator von 1 - 2,5 : 1 mol/mol, bevorzugt 1 - 2 : 1, besonders bevorzugt 1 - 1,5 : 1 und ganz besonders bevorzugt 1 - 1,2 : 1 mol/mol eingesetzt. Ist die Menge an aktivem Katalysator im Reaktionsgemisch nicht bekannt, so können, bezogen auf die Ausgangsmenge an eingesetztem Katalysator, 0,3 - 1,2 mol Desaktivierungsmittel pro mol eingesetztem Katalysator verwendet werden, bevorzugt 0,4 bis 1,0 mol/mol, besonders bevorzugt 0,5 bis 0,8 mol/mol.

Die Zugabe ist abhängig von der Art des Desaktivierungsmittels. So wird Chlorwasserstoff bevorzugt gasförmig über oder bevorzugt durch das Reaktionsgemisch hindurch geleitet, flüssige Desaktivierungsmittel werden zumeist in Substanz oder als Lösung in einem unter den Reaktionsbedingungen inerten Lösungsmittel und feste Desaktivierungsmittel in Substanz oder als Lösung oder Suspension in einem unter den Reaktionsbedingungen inerten Lösungsmittel zugegeben.

Die Zugabe des Desaktivierungsmittels kann bei der Reaktionstemperatur, aber auch bei niedrigerer Temperatur erfolgen.

Eine thermische Desaktivierung kann bevorzugt dann erfolgen, wenn ein Trimerisierungskatalysator mit einer 2-Hydroxyalkyl-ammoniumgruppe eingesetzt wird. Die thermische Desaktivierung derartiger thermolabiler Katalysatoren erfolgt bei Temperaturen oberhalb von 80 °C, bevorzugt oberhalb von 100 °C, besonders bevorzugt oberhalb von 120 und ganz besonders bevorzugt oberhalb von 130 °C, was zu deren Desaktivierung ausgenutzt werden kann.

Eine derartige Desaktivierung kann beispielsweise in einem Abschnitt mit der entsprechenden Temperatur im Reaktor erfolgen, durch einen Wärmetauscher, der zwischen Reaktor und Destillation geschaltet ist und der bei der betreffenden Temperatur betrieben wird, oder in der Destillation, wenn diese bei einer entsprechenden Wandtemperatur betrieben wird.

Selbstverständlich kann die Reaktion auch durch Abkühlen gestoppt werden, beispielsweise durch Abkühlen auf eine Temperatur unter 60 °C, bevorzugt auf unter 55, besonders bevorzugt auf unter 50, ganz besonders bevorzugt auf unter 45 und insbesondere auf unter 40 °C.

Ein derartiges Abkühlen kann beispielsweise in einem Abschnitt mit der entsprechenden Temperatur in dem Reaktor erfolgen oder durch einen Wärmetauscher, der zwischen Reaktor und Destillation geschaltet ist und der bei der betreffenden Temperatur betrieben wird.

Durch ein einfaches Abkühlen bleibt der Katalysator jedoch im Reaktionsgemisch enthalten und somit weiterhin aktiv, so daß die Reaktion nicht im eigentlichen Sinne beendet ist, sondern jederzeit bei Erwärmen auf eine Temperatur oberhalb von ca. 50 °C wieder aufgenommen werden kann.

Mithin ist es bevorzugt, die Reaktion durch thermische Desaktivierung des Katalysators oder durch ein Desaktivierungsmittel zu stoppen.

Durch die Steuerung des Umsatzes können in der Regel auch Eigenschaften des Produktes beeinflußt werden. Bei niedrigen Umsätzen wird in der Regel ein Produkt erhalten, das einem idealen Trimer nahekommt. Je höher man den Umsatz einstellt, desto größer wird in der Regel durch Folgereaktionen auch der Anteil an Tetrameren, Pentameren, Hexameren etc.

Je höher der Gehalt an höheren Oligomeren, desto höher ist zumeist auch die Viskosität der Produkte.

Den Gehalt der einzelnen Oligomere kann man durch Gelpermeationschromatographie (GPC) in Tetrahydrofuran (THF) gegen Polystyrol als Standard bestimmen.

In der Regel wird ein Gehalt an Trimer von 40 bis 80 Gew% angesteuert, bevorzugt 50 bis 75 Gew%, besonders bevorzugt 55 bis 75 Gew% und ganz besonders bevorzugt 55 bis 70 Gew%.

Insbesondere geeignet sind für die erfindungsgemäßen Gemische isocyanuratgruppenhaltige Verbindungen auf Basis Isophorondiisocyanat mit einem NCO-Gehalt gemäß DIN EN ISO 11909 von 16,7 -17,6 %, einem Schmelzbereich von 100 bis 130 °C und/oder einer mittleren NCO-Funktionalität von 3,0 bis 4,0, bevorzugt 3,0 bis 3,7, besonders bevorzugt 3,1 bis 3,5.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiel für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Imidazolische Gruppen als gegenüber Isocyanatgruppen reaktive Gruppen zur Blockierung, hier kurz als "Imidazole" bezeichnet, sind beispielsweise bekannt aus WO 97/12924 und EP 159117, Triazole aus US 4482721, CH-acide cyclische Ketone sind beispielsweise beschrieben in DE-A1 102 60 269, dort besonders in Absatz [0008] und bevorzugt in den Absätzen [0033] bis [0037], besonders bevorzugt Cyclopentanon-2-carbonsäureester und insbesondere Cyclopentanon-2-carbonsäureethylester.

Bevorzugte Imidazole sind beispielsweise solche Imidazole, die neben der freien NH-Gruppe noch eine weitere funktionelle Gruppe enthalten, wie z.B. -OH, -SH, -NH-R, -NH2, -CHO, wie z.B., 4-(Hydroxymethyl) imidazol, 2-Mercapto-imidazol, 2-Aminoimidazol, 1-(3-Aminopropyl) imidazol, 4,5-Diphenyl-2-lmidazolethiol, Histamin, 2-Imidazol-carboxaldehyd, 4-lmidazol carbonsäure, 4,5-lmidazol-dicarbonsäure, L-Histidin, L-Carnosine, und 2, 2'-Bis-(4,5 dimethyl-imidazol).

Geeignete Triazole sind 3-Amino-1,2,4 Triazol, 4-Amino-1,2,4 Triazol, 3,5 Diamino-1,2,4 Triazol, 1H-1,2,4 Triazol-3-Thiol, 5-Methyl-1H-1,2,4 Triazol-3-Thiol und 3-Amino-5-Mercapto-1,2,4-Triazol.

Sekundäre Amine sind insbesondere tert.-Butyl-benyzlamin.

Bevorzugt sind Phenole, Oxime, N-Hydroxyimide, Lactame, Imidazole, Triazole, Malonsäureester und Alkylacetonate, besonders bevorzugt sind Lactame, Phenole, Imidazole, Triazole und Malonsäureester und ganz besonders bevorzugt sind Phenole.

Der Gehalt der Isocyanatkomponente (A) in dem erfindungsgemäßen Gemisch kann in der Regel bis zu 98 Gew%, bezogen auf die Summe aus Polyisocyanat und Lösungsmittel, betragen, bevorzugt bis 95 Gew%, besonders bevorzugt bis 90 Gew%, ganz besonders bevorzugt bis 86 Gew% und insbesondere bis zu 80 Gew%.

Der Gehalt der Isocyanatkomponente (A) in dem erfindungsgemäßen Gemisch beträgt in der Regel 50 Gew% oder mehr, bezogen auf die Summe aus Polyisocyanat und Lösungsmittel, bevorzugt 60 Gew% oder mehr, besonders bevorzugt 63 Gew% oder mehr und ganz besonders bevorzugt 65 Gew% oder mehr.

Als Lösungsmittel für die erfindungsgemäßen Isocyanatzubereitungen wird mindestens ein aromatisches Kohlenwasserstoffgemisch (B) eingesetzt, das überwiegend aus 9 und 10 Kohlenstoffatome aufweisenden alkylsubstituierten aromatischen Verbindungen besteht.

Überwiegend bedeutet dabei einen Gehalt von mehr als 50 Gew%, bevorzugt mindestens 60, besonders bevorzugt mindestens 70, ganz besonders bevorzugt mindestens 85, insbesondere mindestens 80, speziell mindestens 85, oft mindestens 90 und sogar mindestens 95 Gew%.

Als Lösungsmittel eingesetzte technische Kohlenwasserstoffgemische enthalten zumeist Aliphaten, Cycloaliphaten, monocyclische Aromaten und di- oder polycyclische Aromaten sowie deren Gemische.

Aliphaten sind dabei acyclische gesättigte Kohlenwasserstoffe, zumeist geradkettige oder verzweigte Alkane.

Cycloaliphaten sind dabei cyclische gesättigte Kohlenwasserstoffe, zumeist gegebenenfalls mit einer oder mehreren Alkylgruppen substituierte Cycloalkane.

In den Kohlenwasserstoffgemischen (B) beträgt der Anteil an Aliphaten und/oder Cycloaliphaten in der Regel weniger als 30 Gew%, bevorzugt weniger als 25, besonders bevorzugt weniger als 15, ganz besonders bevorzugt weniger als 10, insbesondere weniger als 5, speziell weniger als 2,5 und sogar weniger als 1 Gew%.

Di- und polycyclische Aromaten sind gegebenenfalls mit einer oder mehreren Alkylgruppen substituierte Naphthaline und höhere polykondensierte Aromaten, wie beispielsweise Anthracene, Phenanthrene etc.

In den Kohlenwasserstoffgemischen (B) beträgt der Anteil an Naphthalinen und höheren polykondensierten Aromaten in der Regel weniger als 5 Gew%, bevorzugt weniger als 3, besonders bevorzugt weniger als 2, ganz besonders bevorzugt weniger als 1, insbesondere weniger als 0,5, speziell weniger als 0,25 und sogar weniger als 0,1 Gew%.

Von diesen unterschieden werden die monocyclischen Aromaten. Diese umfassen die Gesamtheit der gegebenenfalls mit einer oder mehreren Alkylgruppen substituierten Benzolringe.

Die monocyclischen Aromaten werden nach der Gesamtzahl der sie aufbauenden Kohlenstoffatome unterschieden.

In den Kohlenwasserstoffgemischen (B) beträgt der Anteil der bis zu 8 Kohlenstoffatome aufweisenden monocyclischen Aromaten in der Regel weniger als 5 Gew%, bevorzugt weniger als 4, besonders bevorzugt weniger als 3, ganz besonders bevorzugt weniger als 2, insbesondere weniger als 1 und speziell weniger als 0,5 Gew%.

In den Kohlenwasserstoffgemischen (B) beträgt der explizite Anteil an Benzol in der Regel weniger als 5 Gew%, bevorzugt weniger als 3, besonders bevorzugt weniger als 1, ganz besonders bevorzugt weniger als 0,5, insbesondere weniger als 0,25, speziell weniger als 0,2 und sogar weniger als 0,1 Gew%.

In den Kohlenwasserstoffgemischen (B) beträgt der Anteil der mindestens 11 Kohlenstoffatome aufweisenden Aromaten in der Regel weniger als 5 Gew%, bevorzugt weniger als 4, besonders bevorzugt weniger als 3, ganz besonders bevorzugt weniger als 2, insbesondere weniger als 1 und speziell weniger als 0,5 Gew%.

Erfindungsgemäß beträgt der in dem aromatischen Kohlenwasserstoffgemisch (B) der Anteil an 10 Kohlenstoffatome aufweisenden alkylsubstituierten aromatischen Verbindungen nicht mehr 25 Gew%, besonders bevorzugt nicht mehr als 20, ganz besonders bevorzugt nicht mehr als 15, speziell nicht mehr als 12, insbesondere nicht mehr als 8 und speziell nicht mehr als 5 Gew%.

Bis zu 8 Kohlenstoffatome aufweisende Aromaten sind beispielsweise Benzol, Toluol, o-, m- und p-Xylol und Ethylbenzol.

9 Kohlenstoffatome aufweisende Aromaten sind beispielsweise 1,2,3-, 1,2,4- und 1,3,5-Trimethylbenzol, 1,2-, 1,3- und 1,4-Ethylmethylbenzol, n-Propylbenzol und iso-Propylbenzol.

10 Kohlenstoffatome aufweisende Aromaten sind beispielsweise 1,2,3,4-, 1,2,3,5- und 1,2,4,5-Tetramethylbenzol, 1,2-, 1,3-und 1,4-Diethylbenzol, 1,2,3-, 1,2,4- und 1,3,5-Ethyldimethylbenzol-Isomere, 1,2-, 1,3-und 1,4-Methyl-n-propylbenzol, 1,2-, 1,3-und 1,4-Methyl-iso-Propylbenzol, n-Butylbenzol, iso-Butylbenzol, sek-Butylbenzol, tert-Butylbenzol, 4- oder 5-Methylindan und Tetralin.

Der Siedebereich der Kohlenwasserstoffgemische (B) kann den Temperaturbereich von ca. 150 °C bis 190 °C umfassen, bevorzugt 150 bis 185, besonders bevorzugt 150 bis 180 und ganz besonders bevorzugt von 154 bis 178 °C.

In den Kohlenwasserstoffgemischen (B) beträgt der Anteil von mindestens ein Heteroatom aufweisenden Verbindungen in der Regel weniger als 3 Gew%, bevorzugt weniger als 2, besonders bevorzugt weniger als 1, ganz besonders bevorzugt weniger als 0,5, insbesondere weniger als 0,25 und speziell weniger als 0,1 Gew%. Beispiele dafür sind z.B. Thiophene, Furane, Pyrrole und Pyridine.

In den Kohlenwasserstoffgemischen (B) beträgt der Schwefelgehalt, berechnet als S mit der Molmasse 32 g/mol, in der Regel weniger als 5000 ppm, bevorzugt weniger als 2000, besonders bevorzugt weniger als 1000, ganz besonders bevorzugt weniger als 500 und insbesondere weniger als 250 ppm.

Der Anteil an olefinisch ungesättigten Verbindungen beträgt in den Kohlenwasserstoffgemischen (B) in der Regel weniger als 3 Gew%, bevorzugt weniger als 2, besonders bevorzugt weniger als 1 und ganz besonders bevorzugt weniger als 0,5 Gew%. Beispiele dafür sind Alkene, Cycloalkene, Styrol und dessen alkylsubstituierten Derivate.

Ein weiterer, optionaler Bestandteil der erfindungsgemäßen Gemische ist mindestens ein weiteres Lösungsmittel, das ein anderes als (B) ist. Dabei handelt es sich also um Nicht-Kohlenwasserstoffe.

Bevorzugt sind die Lösungsmittel ausgewählt aus der Gruppe bestehend aus halogenierten Kohlenwasserstoffen, Ketonen, Estern und Ethern. Besonders bevorzugt sind Ester und unter diesen Alkansäurealkylester und alkoxylierte Alkansäurealkylester.

Halogenierte Kohlenwasserstoffe sind beispielsweise Chlorbenzol und Dichlorbenzol oder dessen Isomerengemische.

Ether sind beispielsweise THF, Dioxan sowie die Dimethyl-, -ethyl- oder-n-butylether von Ethylenglykol, Diethylenglykol, Triethylenglykol, Propylenglykol, Dipropylenglykol oder Tripropylenglykol.

Ketone sind z.B. Aceton, Ethylmethylketon, Diethylketon, iso-Butylmethylketon, Cyclohexanon oder Cyclopentanon.

Ester sind beispielsweise n-Butylacetat, Ethylacetat, 1-Methoxypropylacetat-2 und 2-Methoxyethylacetat.

Derartige Gemische von (B) mit (C) können im Volumenverhältnis 5:1 bis 1:5 vorliegen, bevorzugt im Volumenverhältnis 4:1 bis 1:4, besonders bevorzugt im Volumenverhältnis 3:1 bis 1:3, ganz besonders bevorzugt im Volumenverhältnis 2:1 bis 1:2 und insbesondere im Volumenverhältnis 1,5:1 bis 1:1,5.

Wenn ein Lösungsmittel (C) anwesend ist, dann sind erfindungsgemäße Gemische von (B) mit n-Butylacetat oder von (B) mit 1-Methoxypropylacetat-2 bevorzugt.

Die Herstellung der erfindungsgemäßen Gemische erfolgt in der Regel durch einfaches Vermischen der Isocyanatkomponente (A) mit dem Lösungsmittel (B) sowie gegebenenfalls (C). Insbesondere bei viskosen oder festen Isocyanatkomponenten (A) kann ein einfaches Vermischen Schwierigkeiten bereiten, da dann eine Durchmischung der beiden Phasen erschwert sein kann.

Daher werden Isocyanatkomponente (A) und Lösungsmittel (B) sowie gegebenenfalls (C) bei einer Temperatur von mindestens 40 °C und einem Druck oberhalb von Normaldruck miteinander vermischt.

Die Temperatur kann dabei bevorzugt mindestens 45, besonders bevorzugt mindestens 50, ganz besonders bevorzugt mindestens 55, insbesondere mindestens 60 und speziell mindestens 70 °C betragen.

Die angegebene Temperatur bezieht sich dabei auf mindestens eine der zu vermischenden Komponenten (A) und Lösungsmittel, bevorzugt zumindest auf die Isocyanatkomponente (A) und besonders bevorzugt auf beide.

Normalerweise sollte die Temperatur des Gemisches während des Mischungsvorgangs mindestens 10 °C unter der Siedetemperatur bzw. der unteren Grenze des Siedebereiches gemäß ASTM D850 des verwendeten Lösungsmittels oder Lösungsmittelgemischs bei dem angelegten Druck liegen, bevorzugt mindestens 20 °C und besonders bevorzugt mindestens 40 °C.

Der Druck, unter dem der Mischungsvorgang durchgeführt werden kann, sollte bevorzugt mindestens 0,1 bar (10.000 Pa) oberhalb des Umgebungsdrucks liegen, besonders bevorzugt mindestens 0,2 bar (20.000 Pa), ganz besonders bevorzugt mindestens 0,3 bar (30.000 Pa), insbesondere mindestens 0,5 bar (50.000 Pa) und speziell mindestens 1 bar (100.000 Pa).

Es ist normalerweise ausreichend, die Durchmischung bei einem Überdruck von nicht mehr als 10 bar (10⁶ Pa) durchzuführen, bevorzugt nicht mehr als 8 bar (800.000 Pa) und besonders bevorzugt nicht mehr als 7 bar (700.000 Pa).

Vorteil eines solchen Verfahrens ist, daß unter derartigen Mischungsbedingungen einerseits durch die erhöhte Temperatur die Viskosität der Isocyanatkomponente (A) verringert ist und dieses dadurch leichter mit dem Lösungsmittel vermischbar ist und andererseits das Lösungsmittel durch den erhöhten Druck am Verdampfen gehindert wird.

In einer bevorzugten Ausführungsform wird die Isocyanatkomponente (A) mit der angegebenen Mindesttemperatur in das mindestens eine Lösungsmittel zum Vermischen eingebracht. Dabei kann es von Vorteil sein, wenn die Temperatur des mindestens einen Lösungsmittels um nicht mehr als 40, bevorzugt nicht mehr als 30, besonders bevorzugt nicht mehr als 20 und ganz besonders bevorzugt nicht mehr als 10 °C von der Temperatur des mindestens einen Polyisocyanats abweicht. Bei besonders hochsiedenden Lösungsmitteln Kohlenwasserstofffraktionen kann der Temperaturunterschied aber auch bis zu beispielsweise 150 °C betragen.

In einer besonders bevorzugten Ausführungsform wird die Isocyanatkomponente (A) in Form eines Destillationssumpfes in das mindestens eine Lösungsmittel eingebracht. Da die Polyisocyanate über eine an sich bekannte partielle Oligomerisierung aus Diisocyanaten hergestellt werden ist es erforderlich, daß unumgesetztes Diisocyanat aus dem Reaktionsgemisch abgetrennt wird, um einen Monomerengehalt von weniger als 1 Gew%, bevorzugt von weniger als 0,75 Gew%, besonders bevorzugt von weniger als 0,5 Gew% und ganz besonders bevorzugt von weniger als 0,3 Gew% zu erzielen. Dies geschieht zumeist durch Destillation in an sich bekannter Weise, beispielsweise durch Dünnschichtdestillation, bei einer Temperatur von 90 bis 220 °C, vorteilhafterweise im Vakuum, gegebenenfalls zusätzlich mit Durchleiten von inertem Strippgas.

Als Apparate dafür dienen Flash-, Fallfilm-, Dünnschicht und/oder Kurzwegverdampfer, denen gegebenenfalls eine kurze Kolonne aufgesetzt sein kann.

Die Destillation erfolgt in der Regel bei einem Druck zwischen 0,1 und 300 hPa, bevorzugt unter 200 hPa und besonders bevorzugt unter 100 hPa.

Der Ablauf der Destillation kann dann vorteilhaft direkt mit dem mindestens einen Lösungsmittel vermischt werden. Dies hat weiterhin den Vorteil, daß das heiße, aufkonzentrierte Reaktionsgemisch durch das Einleiten in das Lösungsmittel verdünnt und somit direkt abgekühlt wird, so daß Folgereaktionen, beispielsweise weiterer Polymeraufbau, in dem Reaktionsgemisch verringert werden.

Zur Erzeugung der Gemische ist in der Regel ein Energieeintrag in die Mischeinrichtung von 0,2 W/kg oder mehr ausreichend, bevorzugt 0,5 oder mehr W/kg, besonders bevorzugt 1 oder mehr, ganz besonders bevorzugt 2 oder mehr, insbesondere 5 oder mehr und speziell 10 W/kg oder mehr. In der Regel bringt ein Energieeintrag von mehr als 30 W/kg keine Vorteile. Der angegebene spezifische Leistungseintrag ist hier als eingetragene Leistung pro Menge an Polyisocyanat und Lösungsmittel im Mischraumvolumen der Mischeinrichtung aufzufassen.

Die Vermischung der Ströme erfolgt im Verfahren in einer geeigneten Mischeinrichtung, die sich durch möglichst vollständige Vermischung auszeichnet.

Als Mischeinrichtung wird bevorzugt ein Mischkreis, ein Rührbehälter, ein statischer Mischer oder eine Pumpe verwendet. Als statischer Mischer können alle üblichen statischen Mischer (z.B. Sulzer SMX/SMV) oder auch Düsen- oder Blendenmischeinrichtungen, beispielsweise Koaxialmischdüsen, Y-oder T-Mischer, verwendet werden.

Unter einem Mischkreis wird dabei ein Umpumpkreislauf verstanden, der mindestens eine Pumpe sowie gegebenenfalls mindestens einen Wärmetauscher enthält und in den mindestens eine der zu vermischenden Komponenten, bevorzugt das Polyisocyanat, besonders bevorzugt Polyisocyanat und Lösungsmittel dosiert wird, bevorzugt vor der Pumpe. Der Umpumpkreislauf kann darüberhinaus weitere statische Mischer und/oder Mischelemente enthalten.

Bei der Verwendung eines Mischkreises als Mischeinrichtung wird eine Komponente mit hoher Geschwindigkeit eingedüst. Üblicherweise liegen die Geschwindigkeiten der Ströme unmittelbar vor der Vermischung zwischen 1 und 100 m/s, bevorzugt zwischen 2 und 80 m/s, besonders bevorzugt zwischen 5 und 50 m/s.

Die Mischzeit in dieser Mischeinrichtung beträgt üblicherweise von 0,01 s bis 120 s, bevorzugt von 0,05 bis 60 s, besonders bevorzugt von 0,1 bis 30 s, ganz besonders bevorzugt von 0,5 bis 15 s und insbesondere von 0,7 bis 5 s. Als Mischzeit ist diejenige Zeit zu verstehen, die von dem Beginn des Mischvorgangs vergeht, bis 97,5 % der Fluidelemente des erhaltenen Gemisches einen Mischungsbruch haben, der bezogen auf den Wert des theoretischen Endwert des Mischungsbruchs des erhaltenen Gemisches beim Erreichen des Zustandes perfekter Mischung weniger als 2,5 % von diesem Endwert des Mischungbruches abweichen. (zum Konzept des Mischungsbruches siehe z.B. J.Warnatz, U.Maas, R.W. Dibble: Verbrennung, Springer Verlag, Berlin Heidelberg New York, 1997, 2. Auflage, S. 134.)

Wird die Vermischung in einem oder mehreren Rührbehältern, beispielsweise 1 bis 5, bevorzugt 1 - 3, besonders bevorzugt 1 - 2 und ganz besonders bevorzugt ein Rührbehälter, oder Rohrreaktor durchgeführt, so kann die mittlere Gesamtverweilzeit in allen Rührbehältern zusammen bis zu 7 Stunden betragen, bevorzugt bis zu 1,5 Stunden. Als untere Grenze für die mittlere Gesamtverweilzeit in Rührbehältern gilt in der Regel 15 min, bevorzugt 30 min. In Rohrreaktoren kann die Verweilzeit beispielsweise bis zu 30 min betragen, bevorzugt bis zu 20 min, besonders bevorzugt bis zu 10, ganz besonders bevorzugt bis zu 5 und insbesondere bis zu 2 Minuten. Eine längere Verweilzeit ist möglich bringt aber in der Regel keine Vorteile.

Die Leistung kann bei Rührbehältern über alle möglichen Rührertypen, wie Propeller-, Schrägblatt-, Anker-, Scheiben-, Turbinen- oder Balken-Rührer eingetragen werden. Bevorzugt werden Scheiben- und Turbinen-Rührer eingesetzt.

In einer weiteren möglichen Ausführungsform kann die Durchmischung und der Energieeintrag im Rührbehälter aber auch durch mindestens einen Umpumpkreislauf erfolgen, der gegebenenfalls durch mindestens einen in diesem Umpumpkreislauf angebrachten Wärmetauscher temperiert werden kann.

Beim Reaktor kann es sich beispielsweise um einen Reaktor mit Doppelwandheizung, aufgeschweißten Halb- oder Vollrohren oder/und innenliegenden Heizschlangen handeln. Möglich ist auch ein Reaktor mit außenliegendem Wärmetauscher mit Naturumlauf, bei dem der Kreislaufstrom ohne mechanische Hilfsmittel bewerkstelligt wird, oder Zwangsumlauf (unter Verwendung einer Pumpe), besonders bevorzugt Zwangsumlauf.

Geeignete Umlaufverdampfer sind dem Fachmann bekannt und beispielsweise beschrieben in R. Billet, Verdampfertechnik, HTB-Verlag, Bibliographisches Institut Mannheim, 1965, 53. Beispiele für Umlaufverdampfer sind Rohrbündelwärmetauscher, Plattenwärmetauscher, etc.

Selbstverständlich können im Umlauf auch mehrere Wärmetauscher vorhanden sein.

In einem Rohrreaktor können zur besseren Durchmischung Lochböden, Schlitzböden, Packungen oder statische Mischer eingebaut sein. Die Bodensteinzahl eines solchen Rohrreaktors sollte beispielsweise 3 oder mehr, bevorzugt mindestens 4, besonders bevorzugt mindestens 5, ganz besonders bevorzugt mindestens 8 und insbesondere mindestens 10 betragen.

Während des Durchmischungsvorgangs kann das Gemisch noch weiter erwärmt werden, so daß die Temperatur während Mischungsvorgangs um bis zu 5°C, bevorzugt um bis zu 10 °C, besonders bevorzugt um bis zu 15 °C erhöht werden kann.

Nach dem Mischungsvorgang kann der vermischte Austrag wieder auf Umgebungstemperatur abgekühlt werden. Sinnvollerweise kann der Austrag zum Vorwärmen mindestens eines der Ströme verwendet werden, der in die Vermischung geführt wird oder zur weiteren Erwärmung während der Vermischung.

Als Pumpen werden im Verfahren bevorzugt in allen Strömen, in denen eine isocyanathaltiger Strom gefördert wird, zwangsfördernde Pumpen, beispielsweise Zahnrad-, Schlauch-, Schrauben-, Exzenterschnecken-, Spindel- oder Kolbenpumpen oder Kreiselpumpen eingesetzt.

Zwangsfördernde Pumpen werden im Verfahren bevorzugt zur Förderung von Strömen eingesetzt, die eine Viskosität von 250 mPas oder mehr aufweisen, besonders bevorzugt 300 mPas oder mehr, ganz besonders bevorzugt 400 mPas oder mehr und insbesondere 500 mPas oder mehr. Kreiselpumpen werden bevorzugt zur Förderung von Strömen mit einer Viskosität bis zu 300 mPas, besonders bevorzugt bis zu 250 mPas und ganz besonders bevorzugt bis zu 200 mPas eingesetzt.

Ganz besonders bevorzugt wird der polyisocyanathaltige Strom nach Abtrennung von monomerem Isocyanat mit zwangsfördernden Pumpen gefördert und insbesondere wird ein solcher Strom in das Lösungsmittel eindosiert.

Die Vermischung kann sowohl kontinuierlich, diskontinuierlich oder halbkontinuierlich ausgeübt werden. Dies bedeutet, daß Isocyanatkomponente (A) und Lösungsmittel kontinuierlich gleichzeitig im gewünschten Verhältnis miteinander vermischt werden oder diskontinuierlich in einem gesonderten Behälter vermischt werden oder man eine Komponente, bevorzugt das Lösungsmittel, vorlegt und die andere, bevorzugt das Polyisocyanat, eindosiert. Besonders bevorzugt wird das Lösungsmittel vorgewärmt, beispielsweise auf die oben angegebenen Temperaturen.

Die nach dem beschriebenen Verfahren erhältlichen Gemische von Polyisocyanaten in Lösungsmitteln sind lagerstabil.

Die erhältlichen Gemische von Isocyanatkomponente (A) in den Lösungsmitteln (B) sowie gegebenenfalls (C) werden in der Regel in der Lackindustrie verwendet. Die die erfindungsgemäßen Gemische können beispielsweise in Beschichtungsmitteln für 1K- oder 2K-Polyurethanlacke eingesetzt werden, beispielsweise für Grundierungen, Füller, Basecoats, unpigmentierte Decklacke, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung eingesetzt werden. Besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden. Die Härtung dieser Beschichtungsmittel ist dabei erfindungsgemäß nicht wesentlich. Insbesondere in der Automobilindustrie werden zunehmend Mehrschichthärtungen, z.B. von Clear- und Basecoat, (sogenanntes two-in one), oder von Füller, Clear- und Basecoat, (sogenanntes three-in-one), durchgeführt.

Die mit dem Verfahren hergestellten Gemische liegen in der Regel als Lösungen vor, sie können jedoch in Ausnahmefällen auch als Dispersionen vorliegen.

In dieser Schrift verwendete und Prozent- und ppm-Angaben beziehen sich, falls nicht anders angegeben, auf Gewichtsprozente und -ppm.

In dieser Schrift wird die Viskosität bei 23 °C gemäß DIN EN ISO 3219/A.3 in einem Kegel-Platte-System mit einem Geschwindigkeitsgefälle von 100 s⁻¹ angegeben, falls nicht anders vermerkt.

### Beispiele

Es wurde die Viskosität einer identischen IPDI-Isocyanuratcharge mit einem Trimeranteil von 68 Gew% und einem Restmonomergehalt von 0,5 Gew% (Werte jeweils per GPC ermittelt) in aromatischen Kohlenwasserstoffgemischen verschiedener Zusammensetzungen gelöst, die einen unterschiedlichen Anteil an 10 Kohlenstoffatome aufweisenden alkylsubstituierten aromatischen Verbindungen (kurz "C10-Aromaten") zwischen 2 und 25% aufwiesen und die jeweils eine Viskosität unter 1 mPas aufwiesen. Der Rest der Kohlenwasserstoffgemische bestand im wesentlichen aus 9 Kohlenstoffatome aufweisenden alkylsubstituierten aromatischen Verbindungen. Die einzelnen Bestandteile der Kohlenwasserstoff-Gemische wurden per Gaschromatographie (GC) quantifiziert und über eine Kopplung von GC mit Massenspektrometrie strukturell identifiziert.

| Anteil C10-Aromaten im Lösemittel [%] | Viskosität der resultierenden Lösung [mPas] |
|---|---|
| 2,7 | 1230 |
| 3,3 | 1360 |
| 6,7 | 1590 |
| 11,1 | 1650 |
| 11,4 | 1670 |
| 11,6 | 1650 |
| 22,6 | 2070 |

## Patentansprüche

1. Gemische, enthaltend
- (A) mindestens ein gegebenenfalls blockiertes Diisocyanat und/oder Polyisocyanat,
- (B) mindestens ein aromatisches Kohlenwasserstoffgemisch, überwiegend bestehend aus 9 und 10 Kohlenstoffatome aufweisenden alkylsubstituierten aromatischen Verbindungen, wobei überwiegend einen Gehalt von mehr als 50 Gew% bedeutet sowie
- (C) gegebenenfalls mindestens ein weiteres Lösungsmittel, das ein anderes als (B) ist,
**dadurch gekennzeichnet, daß** in dem aromatischen Kohlenwasserstoffgemisch (B) der Anteil an 10 Kohlenstoffatome aufweisenden alkylsubstituierten aromatischen Verbindungen nicht mehr als 25 Gew% beträgt und die Diisocyanate oder Polyisocyanate in Komponente (A) hergestellt sind aus Isophorondiisocyanat.

2. Gemische gemäß Anspruch 1, **dadurch gekennzeichnet, daß** es sich bei der Komponente (A) um eine Biuret oder Isocyanurat von 1-Isocyanato-3-isocyanatomethyl-3,5,5-trimethyl-cyclohexan (IPDI) handelt.

3. Gemische gemäß einem der vorstehenden Ansprüche, **dadurch gekennzeichnet, daß** in der Komponente (A) in einem Polyisocyanat hergestellt aus Isophorondiisocyanat der Anteil des diesem zugrundeliegenden monomeren Diisocyanats bis zu 5 Gew% beträgt.

4. Gemische gemäß einem der vorstehenden Ansprüche, **dadurch gekennzeichnet, daß** es sich bei der Komponente (A) um ein isocyanuratgruppenhaltiges Polyisocyanat hergestellt aus Isophorondiisocyanat handelt, das einen Gehalt an Trimer von 40 bis 80 Gew% aufweist.

5. Gemische gemäß einem der Ansprüche 1 bis 4, **dadurch gekennzeichnet, daß** es sich bei der Komponente (A) um ein isocyanuratgruppenhaltiges Polyisocyanat auf Basis Isophorondiisocyanat handelt, das einen NCO-Gehalt gemäß DIN EN ISO 11909 von 16,7 - 17,6 %, einen Schmelzbereich von 100 bis 130 °C und eine mittlere NCO-Funktionalität von 3,0 bis 4,0 aufweist.

6. Gemische gemäß einem der vorstehenden Ansprüche, **dadurch gekennzeichnet, daß** die Komponente (A) zumindest teilweise in blockierter Form vorliegt.

7. Gemische gemäß einem der vorstehenden Ansprüche, **dadurch gekennzeichnet, daß** die Komponente (A) lösungsmittelfrei eine Viskosität bei 23 °C gemäß DIN EN ISO 3219/A.3 von mindestens 8.000 mPas und/oder eine Funktionalität von mindestens 4 aufweist.

8. Gemische gemäß einem der vorstehenden Ansprüche, **dadurch gekennzeichnet, daß** die Komponente (A) zu 50 bis 98 Gew% bezogen auf die Summe aus Polyisocyanat und Lösungsmittel enthalten ist.

9. Gemische gemäß einem der vorstehenden Ansprüche, **dadurch gekennzeichnet, daß** der Anteil an Aliphaten und/oder Cycloaliphaten in der Komponente (B) weniger als 30 Gew% beträgt.

10. Gemische gemäß einem der vorstehenden Ansprüche, **dadurch gekennzeichnet, daß** der Anteil an Naphthalinen und polycyclischen Aromaten in der Komponente (B) weniger als 5 Gew% beträgt.

11. Gemische gemäß einem der vorstehenden Ansprüche, **dadurch gekennzeichnet, daß** der Anteil der bis zu 8 Kohlenstoffatome aufweisenden Aromaten in der Komponente (B) weniger als 5 Gew% beträgt.

12. Gemische gemäß einem der vorstehenden Ansprüche, **dadurch gekennzeichnet, daß** der Siedebereich der Kohlenwasserstoffgemische (B) den Temperaturbereich von ca. 150 °C bis 190 °C umfaßt.

13. Gemische gemäß einem der vorstehenden Ansprüche, **dadurch gekennzeichnet, daß** die Komponente (C) ausgewählt ist aus der Gruppe bestehend aus halogenierten Kohlenwasserstoffen, Ketonen, Estern und Ethern.

14. Gemische gemäß einem der vorstehenden Ansprüche, **dadurch gekennzeichnet, daß** die Komponente (C) ausgewählt ist aus der Gruppe bestehend aus n-Butylacetat und 1-Methoxypropylacetat-2.

15. Gemische gemäß einem der vorstehenden Ansprüche, **dadurch gekennzeichnet, daß** die Komponenten (B) und (C) im Volumenverhältnis 5:1 bis 1:5 vorliegen.

16. Verfahren zur Herstellung von Gemischen gemäß einem der vorstehenden Ansprüche, **dadurch gekennzeichnet, daß** man Isocyanatkomponente (A) und Lösungsmittel (B) sowie gegebenenfalls (C) bei einer Temperatur von mindestens 40 °C und einem Druck oberhalb von Normaldruck miteinander vermischt.

17. Verwendung von Gemischen gemäß einem der Ansprüche 1 bis 15 in Beschichtungsmitteln für 1K- oder 2K-Polyurethanlacke, für Grundierungen, Füller, basecoats, unpigmentierte Decklacke, pigmentierte Decklacke und Klarlacke im Bereich Industrie-, Flugzeug- oder Großfahrzeuglackierung, Holz-, Auto-, OEM- oder Autoreparaturlackierung, oder Dekolackierung.

18. Verwendung von aromatischen Kohlenwasserstoffgemischen (B), die überwiegend aus 9 und 10 Kohlenstoffatome aufweisenden alkylsubstituierten aromatischen Verbindungen bestehen, wobei überwiegend einen Gehalt von mehr als 50 Gew% bedeutet, gegebenenfalls im Gemisch mit mindestens einem weiteren Lösungsmittel, das ein anderes als (B) ist, als Lösungsmittel für gegebenenfalls blockierte Diisocyanate und/oder Polyisocyanate, **dadurch gekennzeichnet, daß** in dem aromatischen Kohlenwasserstoffgemisch (B) der Anteil an 10 Kohlenstoffatome aufweisenden alkylsubstituierten aromatischen Verbindungen nicht mehr als 25 Gew% beträgt und die Diisocyanate oder Polyisocyanate in Komponente (A) hergestellt sind aus Isophorondiisocyanat.

19. Beschichtungsmittel für 1 K- oder 2K-Polyurethanlacke, für Grundierungen, Füller, basecoats, unpigmentierte Decklacke, pigmentierte Decklacke und Klarlacke im Bereich Industrie-, Flugzeug- oder Großfahrzeuglackierung, Holz-, Auto-, OEM- oder Autoreparaturlackierung, oder Dekolackierung enthaltend ein Gemisch gemäß einem der Ansprüche 1 bis 15.

## Claims

1. A mixture comprising
- (A) at least one nonblocked or blocked diisocyanate and/or polyisocyanate,
- (B) at least one aromatic hydrocarbon mixture predominantly composed of alkyl-substituted aromatic compounds having 9 and 10 carbon atoms, where predominantly denotes a content of more than 50% by weight, and
- (C) optionally at least one further solvent other than (B),
wherein the fraction of alkyl-subsituted aromatic compounds having 10 carbon atoms in the aromatic hydrocarbon mixture (B) is not more than 25% by weight and the diisocyanates or polyisocyanates in component (A) have been prepared from isophorone diisocyanate.

2. The mixture according to claim 1, wherein component (A) is a biuret or isocyanurate of isocyanato-3-isocyanatomethyl-3,5,5-trimethylcyclohexane (IPDI).

3. The mixture according to either of the preceding claims, wherein in component (A) in a polyisocyanate prepared from isophorone diisocyanate the fraction of its parent monomeric diisocyanate is up to 5% by weight.

4. The mixture according to any one of the preceding claims, wherein component (A) is a polyisocyanate prepared from isophorone diisocyanate which contains isocyanurate groups and has a trimer content of 40% to 80% by weight.

5. The mixture according to any one of claims 1 to 4, wherein component (A) is a polyisocyanate which contains isocyanurate groups and is based on isophorone diisocyanate, which has an NCO content to DIN EN ISO 11909 of 16.7% - 17.6%, a melting range of 100 to 130°C, and an average NCO functionality of 3.0 to 4.0.

6. The mixture according to any one of the preceding claims, wherein component (A) is at least partly in blocked form.

7. The mixture according to any one of the preceding claims, wherein component (A) in solvent-free form has a viscosity at 23°C to DIN EN ISO 3219/A.3 of at least 8000 mPas and/or a functionality of at least 4.

8. The mixture according to any one of the preceding claims, wherein component (A) is present at 50% to 98% by weight based on the sum of polyisocyanate and solvent.

9. The mixture according to any one of the preceding claims, wherein the fraction of aliphatics and/or cycloaliphatics in component (B) is less than 30% by weight.

10. The mixture according to any one of the preceding claims, wherein the fraction of naphthalenes and polycyclic aromatics in component (B) is less than 5% by weight.

11. The mixture according to any one of the preceding claims, wherein the fraction of aromatics having up to 8 carbon atoms in component (B) is less than 5% by weight.

12. The mixture according to any one of the preceding claims, wherein the boiling range of the hydrocarbon mixtures (B) comprises the temperature range from approximately 150°C to 190°C.

13. The mixture according to any one of the preceding claims, wherein component (C) is selected from the group consisting of halogenated hydrocarbons, ketones, esters, and ethers.

14. The mixture according to any one of the preceding claims, wherein component (C) is selected from the group consisting of n-butyl acetate and 1-methoxyprop-2-yl acetate.

15. The mixture according to any one of the preceding claims, wherein components (B) and (C) are present in a volume ratio of 5:1 to 1:5.

16. A process for preparing a mixture according to any one of the preceding claims, which comprises mixing isocyanate component (A) and solvent (B) and also optionally (C) with one another at a temperature of at least 40°C and a pressure above atmospheric pressure.

17. The use of a mixture according to any one of claims 1 to 15 in coating compositions for one-component or two-component polyurethane coating materials, for primers, surfacers, basecoats, unpigmented topcoats, pigmented topcoats, and clearcoats in the sector of industrial coating, aircraft coating or large-vehicle coating, wood coating, automotive finishing, OEM coating or automotive refinish, or decorative coating.

18. The use of aromatic hydrocarbon mixtures (B) composed predominantly of alkyl-substituted aromatic compounds having 9 and 10 carbon atoms, where predominantly denotes a content of more than 50% by weight, optionally in a mixture of at least one further solvent other than (B), as solvents for nonblocked or blocked diisocyanates and/or polyisocyanates, wherein the fraction of alkyl-substituted aromatic compounds having 10 carbon atoms in the aromatic hydrocarbon mixture (B) is not more than 25% by weight and the diisocyanates or polyisocyanates in component (A) have been prepared from isophorone diisocyanate.

19. A coating composition for one-component or two-component polyurethane coating materials, for primers, surfacers, basecoats, unpigmented topcoats, pigmented topcoats, and clearcoats in the sector of industrial coating, aircraft coating or large-vehicle coating, wood coating, automotive finishing, OEM coating or automotive refinish, or decorative coating, comprising a mixture according to any one of claims 1 to 15.

## Revendications

1. Mélanges, contenant :
- (A) au moins un diisocyanate et/ou polyisocyanate éventuellement bloqué,
- (B) au moins un mélange d'hydrocarbures aromatiques, essentiellement constitué par des composés aromatiques à substitution alkyle comprenant 9 et 10 atomes de carbone, essentiellement signifiant une teneur supérieure à 50 % en poids, et
- (C) éventuellement au moins un solvant supplémentaire, qui est différent de (B),
**caractérisés en ce que**, dans le mélange d'hydrocarbures aromatiques (B), la proportion de composés aromatiques à substitution alkyle comprenant 10 atomes de carbone n'est pas supérieure à 25 % en poids, et les diisocyanates ou polyisocyanates dans le composant (A) sont fabriqués à partir de diisocyanate d'isophorone.

2. Mélanges selon la revendication 1, **caractérisés en ce que** le composant (A) est un biuret ou un isocyanurate de 1-isocyanato-3-isocyanato-méthyl-3,5,5-triméthyl-cyclohexane (IPDI).

3. Mélanges selon l'une quelconque des revendications précédentes, **caractérisés en ce que**, dans le composant (A), dans un polyisocyanate fabriqué à partir de diisocyanate d'isophorone, la proportion du diisocyanate monomère sous-jacent à celui-ci est de jusqu'à 5 % en poids.

4. Mélanges selon l'une quelconque des revendications précédentes, **caractérisés en ce que** le composant (A) est un polyisocyanate contenant des groupes isocyanurate fabriqué à partir de diisocyanate d'isophorone, qui présente une teneur en trimère de 40 à 80 % en poids.

5. Mélanges selon l'une quelconque des revendications 1 à 4, **caractérisés en ce que** le composant (A) est un polyisocyanate contenant des groupes isocyanurate à base de diisocyanate d'isophorone, qui présente une teneur en NCO selon DIN EN ISO 11909 de 16,7 à 17,6 %, une plage de fusion de 100 à 130 °C et une fonctionnalité NCO moyenne de 3,0 à 4,0.

6. Mélanges selon l'une quelconque des revendications précédentes, **caractérisés en ce que** le composant se présente au moins partiellement sous forme bloquée.

7. Mélanges selon l'une quelconque des revendications précédentes, **caractérisés en ce que** le composant (A) présente sans solvant une viscosité à 23 °C selon DIN EN ISO 3219/A.3 d'au moins 8 000 mPas et/ou une fonctionnalité d'au moins 4.

8. Mélanges selon l'une quelconque des revendications précédentes, **caractérisés en ce que** le composant (A) est contenu à hauteur de 50 à 98 % en poids, par rapport à la somme du polyisocyanate et du solvant.

9. Mélanges selon l'une quelconque des revendications précédentes, **caractérisés en ce que** la proportion de composés aliphatiques et/ou de composés cycloaliphatiques dans le composant (B) est inférieure à 30 % en poids.

10. Mélanges selon l'une quelconque des revendications précédentes, **caractérisés en ce que** la proportion de naphtalines et de composés aromatiques polycycliques dans le composant (B) est inférieure à 5 % en poids.

11. Mélanges selon l'une quelconque des revendications précédentes, **caractérisés en ce que** la proportion de composés aromatiques comprenant jusqu'à 8 atomes de carbone dans le composant (B) est inférieure à 5 % en poids.

12. Mélanges selon l'une quelconque des revendications précédentes, **caractérisés en ce que** la plage de fusion des mélanges d'hydrocarbures (B) comprend la plage de température allant d'environ 150 °C à 190 °C.

13. Mélanges selon l'une quelconque des revendications précédentes, **caractérisés en ce que** le composant (C) est choisi dans le groupe constitué par les hydrocarbures halogénés, les cétones, les esters et les éthers.

14. Mélanges selon l'une quelconque des revendications précédentes, **caractérisés en ce que** le composant (C) est choisi dans le groupe constitué par l'acétate de n-butyle et l'acétate-2 de 1-méthoxypropyle.

15. Mélanges selon l'une quelconque des revendications précédentes, **caractérisés en ce que** les composants (B) et (C) sont présents en un rapport en volume de 5:1 à 1:5.

16. Procédé de fabrication de mélanges selon l'une quelconque des revendications précédentes, **caractérisé en ce que** le composant isocyanate (A) et le solvant (B), ainsi qu'éventuellement (C) sont mélangés les uns avec les autres à une température d'au moins 40 °C et une pression supérieure à la pression normale.

17. Utilisation de mélanges selon l'une quelconque des revendications 1 à 15 dans des agents de revêtement pour des vernis de polyuréthane 1K ou 2K, pour des agents primaires, des agents de remplissage, des couches de bases, des vernis de recouvrement non pigmentés, des vernis de recouvrement pigmentés et des vernis transparents dans le domaine du vernissage industriel, d'aéronefs ou de poids-lourds, du vernissage de bois, automobile, OEM ou de réparation automobile, ou du vernissage décoratif.

18. Utilisation de mélanges d'hydrocarbures aromatiques (B), qui sont essentiellement constitués par des composés aromatiques à substitution alkyle comprenant 9 et 10 atomes de carbone, essentiellement signifiant une teneur supérieure à 50 % en poids, éventuellement en mélange avec au moins un solvant supplémentaire, qui est différent de (B), en tant que solvant pour des diisocyanates et/ou polyisocyanates éventuellement bloqués, **caractérisée en ce que**, dans le mélange d'hydrocarbures aromatiques (B), la proportion de composés aromatiques à substitution alkyle comprenant 10 atomes de carbone n'est pas supérieure à 25 % en poids, et les diisocyanates ou polyisocyanates dans le composant (A) sont fabriqués à partir de diisocyanate d'isophorone.

19. Agent de revêtement pour des vernis de polyuréthane 1K ou 2K, pour des agents primaires, des agents de remplissage, des couches de bases, des vernis de recouvrement non pigmentés, des vernis de recouvrement pigmentés et des vernis transparents dans le domaine du vernissage industriel, d'aéronefs ou de poids-lourds, du vernissage de bois, automobile, OEM ou de réparation automobile, ou du vernissage décoratif, contenant un mélange selon l'une quelconque des revendications 1 à 15.
